Europäisches Patentamt

European Patent Office

Office européen des brevets

(11) Publication number: **0 403 260 B1**

# EUROPEAN PATENT SPECIFICATION

(45) Date of publication of patent specification: **14.12.94**    (51) Int. Cl.⁵: **B23K 3/03**, B23K 3/04, G01N 27/14

(21) Application number: **90306451.7**

(22) Date of filing: **13.06.90**

(54) **Solder joint system.**

(30) Priority: **13.06.89 US 365300**

(43) Date of publication of application:
**19.12.90 Bulletin 90/51**

(45) Publication of the grant of the patent:
**14.12.94 Bulletin 94/50**

(84) Designated Contracting States:
**AT BE CH DE FR GB IT LI NL SE**

(56) References cited:
**US-A- 4 256 945**
**US-A- 4 839 501**

**PATENT ABSTRACTS OF JAPAN vol. 11, no. 234 (M-611), 30July 1987; & JP-A-6245469 (NIPPEI TOYAMA CORP.) 27.02.1987**

**PATENT ABSTRACTS OF JAPAN vol. 13, no. 229 (M-831), 26May 1989;& JP-A-144277 (NKK CORP.) 16.02.1989**

**idem**

(73) Proprietor: **METCAL INC.**
**1530 O'Brien Drive**
**Menlo Park**
**California 94025 (US)**

(72) Inventor: **Cowell, Mark J.**
**982 Lupin Way**
**San Carlos,**
**California 94070 (US)**
Inventor: **Swift, James C.**
**847 Roble Avenue**
**Menlo Park,**
**California 94025 (US)**
Inventor: **McGaffigan, Thomas H.**
**1563 Mizzen Lane**
**Half Moon Bay,**
**California 94019 (US)**

(74) Representative: **Hayward, Denis Edward Peter et al**
**Lloyd Wise, Tregear & Co.**
**Norman House**
**105-109 Strand**
**London WC2R 0AE (GB)**

Rank Xerox (UK) Business Services
(3.10/3.09/3.3.3)

## Description

The present invention relates to the use, during a soldering operation, of a power measurement to determine when a solder joint has been properly completed, and more particularly to predetermining various parameters of a solder system such that by measuring peak power delivered by a soldering iron or other electrical heater, the proper completion of a connection is determinable.

Cold solder joints have been a major source of problems in electrical and electronic systems since the inception of this industry. The problem with cold solder joints has been greatly increased with the advent of chips, since overheating to insure against a cold solder joint may very well damage or destroy expensive chips. Thus, a solderer, Particularly one in a high production environment, is often walking a tightrope between underheating and overheating during a soldering operation, both conditions resulting in a defective component or board.

Japanese Patent Application 62-045469 [Patent Abstracts of Japan, Vol. 11, No. 234 (M-611)] describes a control method for a laser Soldering device in which the temperature rise of a part to be soldered as a result of laser irradiation is monitored over minute long time intervals. A figure for the laser power is calculated from the temperature rise gradient and when power is within a correct range solder is supplied to the part. An ideal temperature time gradient for the particular power and temperature compared to the measured temperature time gradient, the comparison allowing a determination to be made of whether a successful soldering operation has been carried out.

A method of ensuring a proper soldering operation, in accordance with the invention, comprises determining a desired function being the peak power input to a heater as a function of time and/or temperature which is required to produce a proper soldering operation, initiating the soldering operation, measuring power input to the heater and determining the occurrence of the peak power as a function of time and/or temperature, wherein a proper soldering operation is considered to have taken place if the measured function equals the desired function.

The invention also provides an apparatus according to claim 8.

Two different embodiments for insuring a good solder joint, both employing peak power measurement, are disclosed.

In a first embodiment, peak power achieved within a specified length of time indicates that the connection has achieved proper temperature to provide a good solder joint.

Specifically, in this approach it is known that the predetermined temperature required for a good solder joint has been reached within a specified length of time, if a predetermined peak power has been achieved. The parameters cited herein are examples only, and they vary with each specified class of loads and must be predetermined.

To determine the parameters, a fundamental function is determined -- time. The architecture of a board or the like is studied, as well as the physical tolerance to temperature of the components on the board, to determine the maximum safe exposure of various elements to elevated temperatures for the said specified period of time. The temperatures to which an element is exposed vary depending upon location of the elements relative to the source of heat; the soldering iron tip, shape and wattage; iron temperature; and the rate of transfer of heat to the junction to be soldered. The next parameter is the heat required to be transferred to provide a proper solder joint, a function of the fusion temperature of the solder and the rate of dissipation of heat from the whole complex.

Once these parameters have been determined, then by experimentation, the peak power required to achieve the desired temperature to provide a proper joint is determined. Thereafter, the solderer must only listen for or look for a signal indicating that such peak power has been achieved.

In the second embodiment the configuration of a peak power versus time curve is chosen as the determinative of a proper solder joint. Power is supplied to a heater in contact with a connection to be soldered. The flow of solder is observed, and when it is determined that the connection is properly heated and melted, the plot of power versus time is noted. This plot now serves as a "print" of a completed joint.

The heater employed in this operation must have low thermal inertia, and the heater must be at the tip of the heater, and be essentially isolated from heat sinks or other heat sources. A ceramic is employed to accomplish such isolation. The thermal inertia of the heater must be much less than the items to be heated. Coupling from a source of current to the heater is preferably inductive, to further reduce thermal inertia.

The soldering irons which were employed in developing the curves and data presented herein are disclosed in U.S. Pat. No. 4,839,501, these irons being temperature self-regulating heaters driven by a constant current, wherein

$$\frac{\Delta I}{I} < -\, 1/2\, \frac{\Delta R}{R}\,,$$

where I is current and R is resistance. The iron described in Pat. No. 4,256,945 may also be employed.

Figure 1 is a graph depicting effect of load size on the power/connection temperature curve.

Figure 2 indicates effect of tip configuration on the power/temperature relationship.

Figure 3 shows the results of a solder pot load test on three different cartridges of the same wattage.

Figure 4 illustrates a solder pot.

Figure 5 is a block diagram of a soldering iron control system based on the present invention.

Figure 6 illustrates a heater for use in the second embodiment of the invention.

Figure 7 is a graph illustrating a satisfactory curve and an unsatisfactory curve.

There are certain assumptions that are made in the following description of the first embodiment described below:

1. A quality solder connection is a connection that has been increased in temperature to 450-500°F (230-260 °C)in less than five seconds.

2. The 450-500°F (230-260 °C) connection temperature must be maintained for a 0.5 second.

3. The operator will then only require the peak power output reading to determine if a quality solder connection has been formed. A tip selection procedure may be required by the process engineer. This will be discussed subsequently. The area of the soldering iron tip on the surface of the connection region must be maintained constant for all like operations.

4. The tip surface has been properly tinned and maintained.

5. The temperature gradient of the connection will be considered insignificant (not always true).

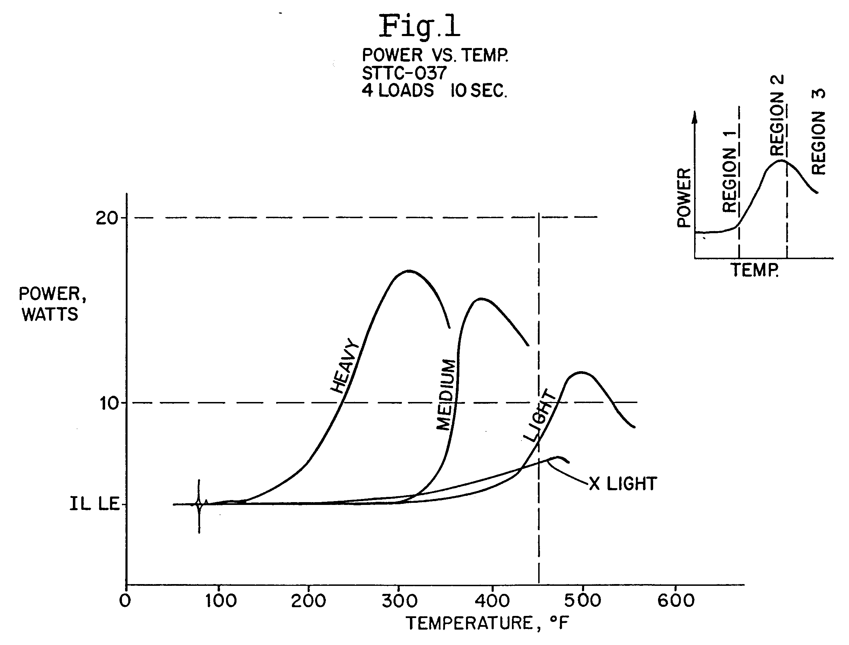

Before considering the graphs of Figure 1, it is noted that two phases of heat transfer occur during the formation of a solder connection. The first phase is transient. Heat is delivered, based on the stored energy of the tip and the heat requirements of the connections. This phase of the connection formation is not very useful to this invention because the heater temperature (power) is not related to the connection temperature. After the heater temperature has reached its minimum point and starts to increase, the connection temperature depends upon the heater temperature. Therefore, an important design guideline can be defined. For the system to be effective, the heater must supply heat to the connection. In practicing the present invention, it is not possible to determine if a good solder connection has occurred unless the heater's output is required, since the relationship defined herein depends upon the relationship of power to the heater as a function of temperature or time. This phase provides useful information about the solder connection, since now power and temperature are related.

Referring now specifically to the accompanying drawings, there are illustrated three curves, each made by plotting power VS connection temperature. All curves have the same general configuration.

Three distinct regions (see Figure 1) can be identified in a soldering operation. The first region is termed STORED HEAT. During this phase of forming a solder connection, all the heat is supplied by the stored heat of the tip. The tip temperature decreases, but the net power is unchanged. This phase occurs rapidly, definitely complete in less than a second. Temperature control of the solder connection is not possible in this region. Since it is desired to have the heater respond to the load as quickly as possible, it is desired that the tip have as little thermal inertia as possible. The second region, TRANSIENT HEATING, starts once the heater responds to the drop in tip temperature. Power increases rapidly to a peak and the connection temperature continues to increase, though slower than in the first region. Heat is supplied to the connection by the heater, as well as some contribution due to the tip temperature's further decline. Temperature control of the solder connection is improved, due to the majority of the heat delivered directly from the heater, but still requires operator judgment. The third region, STEADY STATE HEATING, is the most interesting. During this phase, the net power is decreasing as the connection temperature increases. The connection temperature increases slowly, and heat is supplied to the connection totally by the heater. Since the temperature increase obeys the laws of steady state heat transfer, the connection temperature is related to the power in the following manner:

(heater temperature - connection temperature) = net power X thermal resistance

Figure 1 shows the effect of load size on the power/connection temperature curve. For any given tip configuration, increasing the load increases the peak power and decreases the peak power temperature. Solder connections formed on the heavy and medium load were not quality connections. The light load also did not produce a quality connection, since the peak power occurred well after the desired temperature had been reached, indicating an over-power iron.

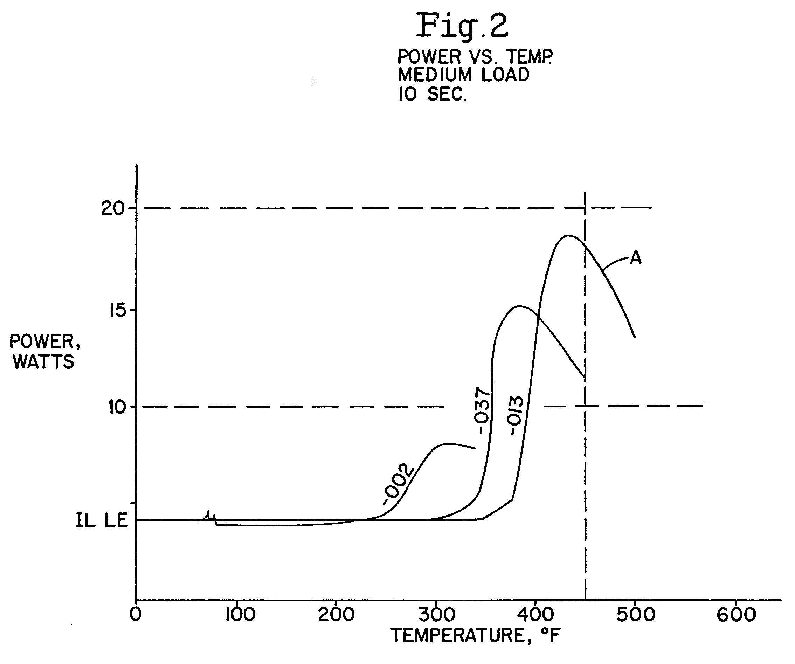

In Figure 2 the load is constant, but the configuration of the tip was changed. This figure shows that a larger and/or shorter tip, curve A, increases peak power and increases the peak power temperature. Only the connection formed by the cartridge designated -013 could be considered a quality connection. All three cartridges were 35 watt heaters, and all curves were taken over the same time interval. The third region, STEADY STATE HEATING, is the most interesting because the connection temperature can be predicted from the net power.

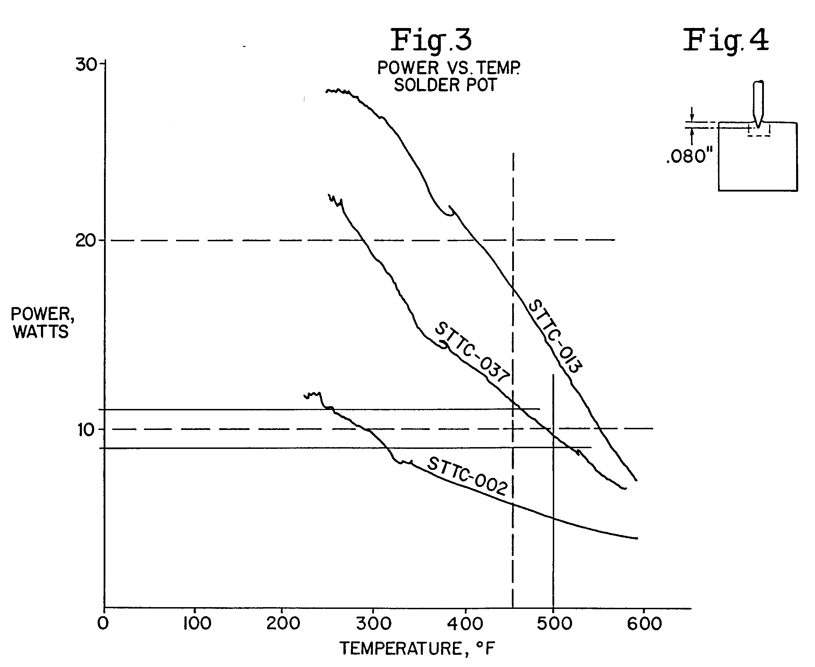

A solder pot employed in these tests is illustrated in Figure 4, and comprises a temperature-controlled container with solder. Tests were conducted by placing the soldering iron tip in the fused solder. The solder pot load test allows characterization of the output power of a cartridge when its tip is at different temperatures. The output power versus temperature variation is due to the thermal resistance of the tip. The lower the thermal resistance (short and large tips), the steeper the curve. Figure 3 shows the results of the solder pot load test for three different cartridges of the same wattage, plus different mass. Since this is also steady state heat transfer, it is the output power that allows the formation of a quality solder connection.

A quality connection is formed at a temperature between 450-500 °F (230-250 °C). For a STTC-037 cartridge, the output power range is 11.5 to 9.5 watts. When using a .033 tip cartridge, the peak power must achieve at least 9.5 watts. If it doesn't, the connection temperature would be too high, or the tip preparation was incorrect. If the peak power exceeds 11.5 watts, a quality connection has been performed only if the power decreases to 11.5 in less than five seconds.

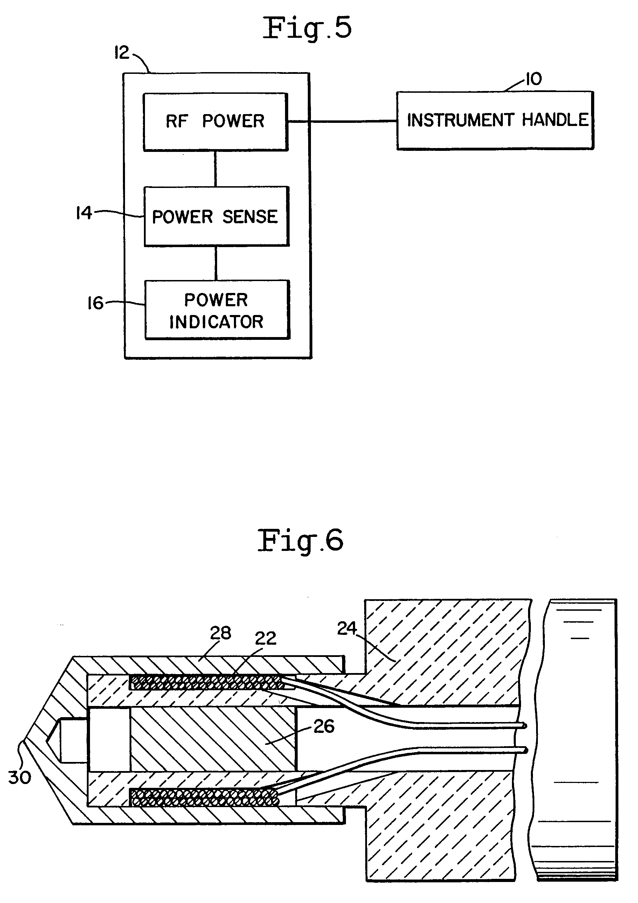

Referring now to Figure 5 of the accompanying drawings, this is illustrated in a block diagram of a soldering iron control system based on the present invention. A soldering iron 10, designated in the drawing as an instrument handle, is provided with r.f. power by an RF6-30 power supply 12, which includes a power sensor 14. Sensor 14 senses the power supplied to iron 10, and provides a d.c. signal to a peak power indicator 16. As soon as peak power is indicated, the solder connection has been completed and the operation is to be terminated. Termination may be by the operator, or in a fully automated system, by the equipment.

Referring now specifically to Figure 6 of the accompanying drawings, a coil 22 is wound on a hollow cylindrical ceramic body 24, or other thermal and electrical insulator. A ferromagnetic core 26 is located internally of the hollow ceramic in radial alignment with coil 24. A hollow shell 28 of ferromagnetic material is disposed about the ceramic member in alignment with the coil, and extends over the end of the hollow ceramic to provide a heater tip 30.

In operation, upon excitation of the coil, flux, enhanced by core 26, is coupled to shell 28 which is heated thereby until it approaches its Curie temperature, in this instance, about 500 °F (250 °C). As Curie temperature is closely approached, the shell and core approach paramagnetism, and as disclosed in the cited patents, heating is reduced until these members again become ferromagnetic and the heating cycle is repeated.

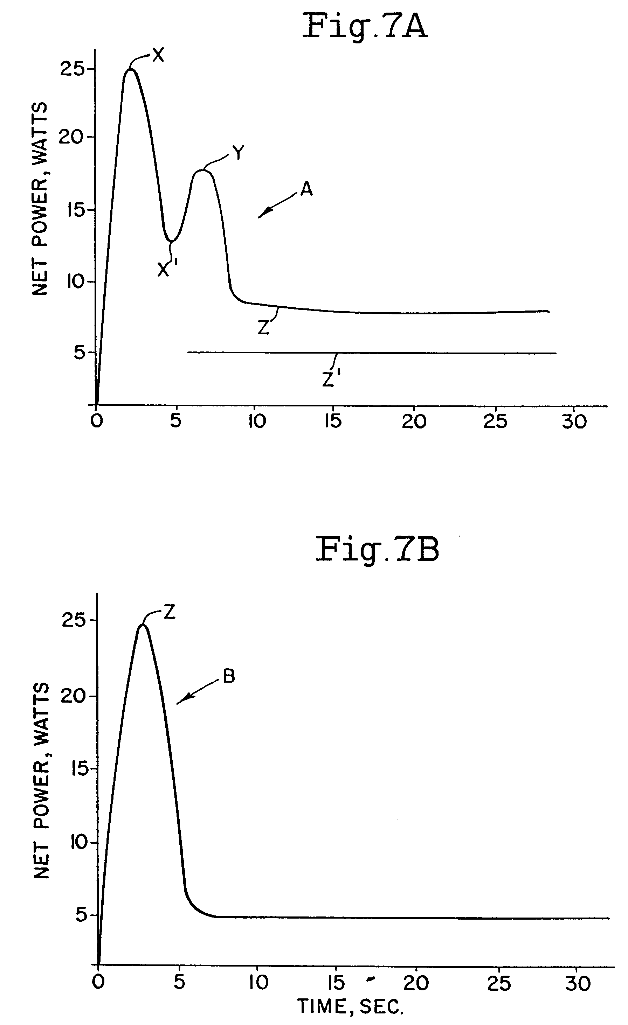

Referring to the graphs of Figure 7, the good and bad profiles are illustrated. In Curve A, the heater is in maximum heating mode at point X, at which time, Curie temperature is reached and the power being delivered to the load falls off to a low point, $X^1$. A second peak, point Y, results from the solder melting and, thus, spreading out and delivering heat to the connection, which reduces the heater temperature. This requires more power to maintain temperature. After all elements to be heated have been, the heater goes into an idle mode and temperature falls to a level Z. If, as in Graph A, the idle power is above, no load line $Z^1$, the connection has been completed properly.

Curve B illustrates a bad solder connection. The Curve rises to peak power at Z but does not provide the second peak Y, indicating that the solder has not been melted. Also, the line Z falls to about the no-load line, indicating little or no heat transfer to the load.

Thus, by observing the plot of power versus time, as set forth in Figure 7, a good or bad solder joint is readily determined.

**Claims**

1. A method of ensuring a proper soldering operation comprising determining a desired function being the peak power input to a heater (10) as a function of time and/or temperature which is required to produce a proper soldering operation, initiating the soldering operation, measuring power input to the heater (10) and determining the occurrence of the peak power as a function of time and/or temperature, wherein a proper soldering operation is considered to have taken place if the measured function equals the desired function.

2. A method as claimed in Claim 1, wherein the soldering operation is terminated in response to detection of the desired peak power input function of time and/or temperature.

3. A method as claimed in either Claim 1 or Claim 2, wherein the desired function is a specific configuration of peak power as a function of time.

4. A method as claimed in any preceding Claim, wherein the desired function is a desired peak power level.

5. A method as claimed in any preceding Claim, wherein the desired function is a desired maximum peak power level occurring within a specified length of time.

6. A method as claimed in any preceding Claim, wherein the desired function includes two power peaks and a final level above a predetermined level.

7. A method as claimed in any preceding Claim, wherein the desired function is developed by initially measuring the thermal characteristics of a specific load, the thermal inertia of the heater (10), the area of contact between the heater (10) and the load, the mass of the heater (10) and time and temperature requirements for a proper heating operation.

8. Apparatus for ensuring a proper soldering operation comprising a heater (10), means for determining a desired function being peak power input to the heater (10) as a function of time and/or temperature which is required to produce a proper soldering operation, means initiating a heating operation by the heater (10), means (14) for measuring power and determining the occurrence of the peak power as a function of time and/or temperature, and, means (16) is provided for comparing the measured function to the desired function.

9. Apparatus as claimed in Claim 8, wherein means is provided for terminating the soldering operation in response to detection of the desired peak power input function of time and/or temperature.

**Patentansprüche**

1. Verfahren zur Gewährleistung eines exakten Lötvorgangs bestehend aus der Ermittlung einer Sollfunktion, die die Spitzenleistungsabgabe an eine Heizvorrichtung (10) als Funktion von Zeit und/oder Temperatur darstellt, die für einen exakten Lötvorgang erforderlich ist, der Einleitung des Lötvorgangs, dem Messen der Leistungsabgabe an die Heizvorrichtung (10) und aus der Ermittlung des Auftretens der Spitzenleistung als Funktion von Zeit und/oder Temperatur, wobei ein exakter Lötvorgang als erfolgt anzusehen ist, wenn die Istfunktion der Sollfunktion entspricht.

2. Verfahren nach Anspruch 1, wobei der Lötvorgang als Reaktion auf die Feststellung der Spitzenleistungsabgabe als Sollfunktion von Zeit und/oder Temperatur beendet ist.

3. Verfahren nach Anspruch 1 oder Anspruch 2, wobei die Sollfunktion eine spezifische Konfiguration der Spitzenleistung als Zeitfunktion ist.

4. Verfahren nach einem der obigen Ansprüche, wobei die Sollfunktion ein Sollspitzenleistungspegel ist.

5. Verfahren nach einem der obigen Ansprüche, wobei die Sollfunktion ein maximaler Sollspitzenleistungspegel ist, der innerhalb eines spezifischen Zeitraums eintritt.

6. Verfahren nach einem der obigen Ansprüche, wobei die Sollfunktion zwei Leistungsspitzen und einen Endpegel über einem vorbestimmten Pegel aufweist.

7. Verfahren nach einem der obigen Ansprüche, wobei die Sollfunktion durch eine Anfangsmessung der Wärmeeigenschaften einer bestimmten Last, der Wärmeträgheit der Heizvorrichtung (10), der Kontaktfläche zwischen der Heizvorrichtung (10) und der Last, der Masse der Heizvorrichtung (10) und der Zeit- und Temperaturerfordernisse für einen exakten Heizvorgang entwickelt wird.

8. Gerät zur Gewährleistung eines exakten Lötvorgangs bestehend aus einer Heizvorrichtung (10), einer Vorrichtung zur Ermittlung einer Sollfunktion, die die Spitzenleistungsabgabe an eine Heizvorrichtung (10) als Funktion von Zeit und/oder Temperatur darstellt, die für einen exakten Lötvorgang erforderlich ist, einer Vorrichtung zur Einleitung eines Heizvorgangs der Heizvorrichtung (10), einer Vorrichtung (14) zur Leistungsmessung und Ermittlung des Auftretens der Spitzenleistung als Funktion von Zeit und/oder Temperatur und aus einer Vorrichtung (16) zum Vergleich der Istfunktion mit der Sollfunktion.

9. Gerät nach Anspruch 8, wobei eine Vorrichtung zur Beendigung des Lötvorgangs als Reaktion auf die Feststellung der Spitzenleistungsabgabe als Sollfunktion von Zeit und/oder Temperatur vorhanden ist.

**Revendications**

1. Procédé pour effectuer une opération de soudage correcte, comprenant la détermination de l'évolution de fonctionnement souhaitée, concernant la puissance de crête amenée à un élément chauffant (10), en fonction du temps et/ou de la température requises pour produire une opération de soudage correcte, initiation de l'opération de soudage, mesure de la puissance fournie à l'élément chauffant (10), détermination de l'éventualité d'atteinte de la puissance de crête en fonction du temps et/ou de la température, dans lequel l'opération de soudage correcte est considérée comme avoir eu lieu si l'évolution de fonctionnement mesurée est identique à l'évolution de fonctionnement souhaitée.

2. Procédé selon la revendication 1, dans lequel l'opération de soudage est terminée en réponse à la détection de l'apparition de la puissance de crête fournie, en fonction du temps et/ou de la température.

3. Procédé selon l'une quelconque des revendications 1 et 2, dans lequel l'évolution de fonctionnement souhaitée a une configuration spécifique pour la puissance de crête, en fonction du temps.

4. Procédé selon l'une quelconque des revendications précédentes dans lequel l'évolution de fonctionnement souhaitée est l'atteinte d'un niveau de puissance de crête souhaité.

5. Procédé selon l'une quelconque des revendications précédentes, dans lequel l'évolution de fonctionnement souhaitée est l'atteinte d'un niveau de puissance de crête maximum souhaité, dans les limites d'une période de temps déterminée.

6. Procédé selon l'une quelconque des revendications précédentes dans lequel l'évolution de fonctionnement souhaitée comprend deux crêtes de puissance et un niveau final supérieur à un niveau prédéterminé.

7. Procédé selon l'une quelconque des revendications précédentes, dans lequel l'évolution de fonctionnement souhaitée est suivie en procédant à une mesure initiale des caractéristiques thermiques d'une charge spécifique, de l'inertie thermique de l'élément chauffant (10), de l'aire de la surface de contact entre l'élément chauffant (10) et la charge, de la masse de l'élément chauffant (10) et des valeurs de temps et des températures nécessaires pour obtenir une opération de chauffage correcte.

8. Appareil pour mettre en oeuvre une opération de soudage correcte comprenant un élément chauffant (10), des moyens pour déterminer une évolution de fonctionnement souhaitée, par le biais de la puissance de crête introduite à l'élément chauffant (10), en fonction du temps et/ou de la température requis pour produire une opération de soudage correcte, des moyens pour initier une opération de chauffage à l'aide de l'élément chauffant (10), les moyens (14) pour initier une opération de chauffage à l'aide de l'élément chauffant (10), des moyens (14) pour mesurer la puissance et déterminer l'occurrence de l'apparition d'une puissance de crête, en fonction du temps et/ou de la température, et des moyens (16) étant prévus pour comparer l'évolution de fonctionnement mesurée à l'évolution de fonctionnement souhaitée.

9. Appareil selon la revendication 8, dans lequel sont prévus des moyens pour achever l'opération de soudure, en réponse à la détection de l'atteinte de la puissance de crête introduite souhaité en fonction du temps et/ou de la température.

# Fig.1

POWER VS. TEMP.
STTC-037
4 LOADS IO SEC.

# Fig.2

POWER VS. TEMP.
MEDIUM LOAD
IO SEC.

## Fig.3
### POWER VS. TEMP. SOLDER POT

POWER, WATTS

30

20

STTC-037

STTC-013

10

STTC-002

0    100    200    300    400    500    600

TEMPERATURE, °F

## Fig.4

.080"

EP 0 403 260 B1

# Fig. 5

# Fig. 6

# Fig.7A

# Fig.7B